(19) **Europäisches Patentamt / European Patent Office / Office européen des brevets**

(11) **EP 4 484 490 A1**

(12) # EUROPEAN PATENT APPLICATION
published in accordance with Art. 153(4) EPC

(43) Date of publication:
**01.01.2025 Bulletin 2025/01**

(21) Application number: **23912800.2**

(22) Date of filing: **22.12.2023**

(51) International Patent Classification (IPC):
**C08L 23/04** $^{(2006.01)}$  **C08L 23/06** $^{(2006.01)}$
**C08L 23/08** $^{(2006.01)}$  **C08J 5/18** $^{(2006.01)}$

(52) Cooperative Patent Classification (CPC):
**C08J 5/18; C08L 23/04; C08L 23/06; C08L 23/08**

(86) International application number:
**PCT/KR2023/021363**

(87) International publication number:
**WO 2024/144125 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2022 KR 20220189077**
**20.12.2023 KR 20230187174**

(71) Applicant: **LG Chem, Ltd.**
**Yeongdeungpo-gu**
**Seoul 07336 (KR)**

(72) Inventors:
• **OH, Hee Su**
 **Daejeon 34122 (KR)**
• **CHOI, Yi Young**
 **Daejeon 34122 (KR)**
• **SONG, Christine Jisoo**
 **Daejeon 34122 (KR)**
• **JEONG, Hyun Mook**
 **Daejeon 34122 (KR)**
• **YOON, Jiwon**
 **Daejeon 34122 (KR)**

(74) Representative: **Hoffmann Eitle**
**Patent- und Rechtsanwälte PartmbB**
**Arabellastraße 30**
**81925 München (DE)**

(54) **POLYETHYLENE RESIN COMPOSITION**

(57)    Provided is a polyethylene resin composition exhibiting reduced TVOCs along with excellent stretchability, thereby being useful in manufacturing stretched films.

**EP 4 484 490 A1**

**Description**

[TECHNICAL FIELD]

Cross-reference to Related Application

The present application is based on, and claims priority from, Korean Patent Application Nos. 10-2022-0189077 and 10-2023-0187174, filed on December 29, 2022 and December 20, 2023, respectively, the disclosures of which are hereby incorporated by reference herein in their entirety.

The present invention relates to a polyethylene resin composition exhibiting reduced total volatile organic compound (TVOC) emissions along with excellent stretchability and is useful in manufacturing stretched films.

[BACKGROUND ART]

With the recent increase in consumer concern for the environment, single-material packaging that is easy to recycle is attracting attention. Representatively, in the food packaging and distribution industry, there is a trend to manufacture "All-PE" films using only polyethylene (PE) which is a general-purpose material.

Previously, composite materials with BOPA, BOPET, BOPP, etc. applied to a printing layer have been used in multi-layer film packaging materials. In order to replace the composite materials by PE, they require higher physical properties than existing PE blown films.

Meanwhile, biaxially oriented polyethylene (BOPE) film is manufactured by stretching a cast sheet in both the machine direction (MD) and the transverse direction (TD), and has remarkably better tensile strength, impact strength, and transparency than existing blown films.

The key to developing high-density polyethylene (HDPE) for BOPE is that biaxial stretching from MD stretching to TD stretching must be performed.

Accordingly, research and development are needed to prepare a polyethylene or polyethylene resin composition with excellent stretchability.

[DETAILED DESCRIPTION OF THE INVENTION]

[TECHNICAL PROBLEM]

In order to solve the problems of the prior art, there is provided a polyethylene resin composition exhibiting reduced TVOCs along with excellent stretchability through control of the crystal structure.

There is also provided a stretched film exhibiting excellent stretchability by using the polyethylene resin composition.

[TECHNICAL SOLUTION]

In order to achieve the above objects, there is provided a polyethylene resin composition including an ethylene homopolymer or an ethylene/C4 to C10 alpha olefin copolymer and satisfying the following requirements of (a1) to (a3):

(a1) the content of a first crystalline polymer is 0.1% to 1.8%, which is defined as a ratio of a peak area of a fraction eluted in the elution temperature range of 25°C to 30°C relative to the total peak area, and the content of a second crystalline polymer is 20% to 40%, which is defined as a ratio of a peak area of a fraction eluted in the elution temperature range of 40°C to 90°C relative to the total peak area, in a TREF analysis graph with the elution temperature (Te) on the x-axis and the elution amount (dw/dt) on the y-axis during a temperature rising elution fractionation (TREF) analysis,

(a2) a density measured at a temperature of 23°C in accordance with the ASTM D1505 method: 0.940 g/cm$^3$ or more, and

(a3) a melt index ($MI_{2.16}$) measured in accordance with the ASTM D1238 (condition E, 190°C, under a load of 2.16 kg) method: 0.1 g/10 min or more and 10 g/10 min or less.

There is also provided a stretched film including the polyethylene resin composition.

[ADVANTAGEOUS EFFECTS]

According to the present invention, provided is a polyethylene resin composition exhibiting reduced TVOCs along with excellent stretchability.

Provided is also a stretched film exhibiting excellent stretchability by using the polyethylene resin composition.

[DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, numbers, steps, components, or combinations thereof, and do not exclude the existence or the possibility of addition of one or more different characteristics, numbers, steps, components or combinations thereof beforehand.

The present invention may be variously modified and have various forms, and specific exemplary embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

Hereinafter, a polyethylene resin composition of the present invention will be described in detail.

A polyethylene resin composition according to the present invention includes an ethylene homopolymer or an ethylene/C4 to C10 alpha olefin copolymer, and satisfies the following requirements of (a1) to (a3):

(a1) the content of a first crystalline polymer is 0.1% to 1.8%, which is defined as a ratio of a peak area of a fraction eluted in the elution temperature range of 25°C to 30°C relative to the total peak area, and the content of a second crystalline polymer is 20% to 40%, which is defined as a ratio of a peak area of a fraction eluted in the elution temperature range of 40°C to 90°C relative to the total peak area, in a TREF analysis graph with the elution temperature (Te) on the x-axis and the elution amount (dw/dt) on the y-axis during a temperature rising elution fractionation (TREF) analysis,

(a2) a density measured at a temperature of 23°C in accordance with the ASTM D1505 method: 0.940 g/cm$^3$ or more, and

(a3) a melt index ($MI_{2.16}$) measured in accordance with the ASTM D1238 (condition E, 190°C, under a load of 2.16 kg) method: 0.1 g/10 min or more and 10 g/10 min or less.

Usually, biaxially oriented polyethylene (BOPE) film is manufactured by stretching a cast sheet in both machine direction (MD) and transverse direction (TD). As described, since biaxial stretching must be performed from MD stretching to TD stretching, PE for BOPE requires excellent stretchability.

In order to ensure stretchability in polyethylene (PE), a structure must exist that allows interlamellar lateral linking between lamellae within the PE so that secondary crystallization occurs as late as possible in MD stretching, followed by subsequent TD stretching.

The polyethylene resin composition according to the present invention is a semicrystalline polymer, and may include crystalline and amorphous regions. Specifically, in the crystalline region, a polymer chain including an ethylene repeating unit or an alpha olefin repeating unit is folded to form a bundle, thereby forming a crystalline domain (or a segment) in the form of lamella.

The present inventors of the present invention have found that when the content of crystalline polymers in the elution temperature range which affects stretchability and TVOC properties is controlled to an optimal range through a TREF analysis, it is possible to achieve better stretchability and TVOC properties than those of existing polyethylene resin compositions having the same density and melt index, thereby completing the present invention.

Specifically, during TREF analysis, a crystalline polymer (hereinafter, referred to as 'first crystalline polymer') that is eluted in the elution temperature range of 25°C to 30°C is a soluble fraction. The content of the first crystalline polymer originates from an ultra-low molecular weight region of the polyethylene resin composition and affects TVOCs. Specifically, as the content of the first crystalline polymer is lower, the TVOCs are reduced.

In addition, a crystalline polymer (hereinafter, referred to as 'second crystalline polymer') that is eluted in the elution temperature range of 40°C to 90°C delays secondary crystallization during MD stretching and may improve stretchability through interlamellar lateral linking.

Accordingly, the polyethylene resin composition according to the present invention may simultaneously improve stretchability and TVOC properties while maintaining excellent mechanical strength properties by including the first crystalline polymer that is eluted in the elution temperature range of 25°C to 30°C in a content of 0.1% to 1.8% and the second crystalline polymer that is eluted in the elution temperature range of 40°C to 90°C in a content of 20% to 40% during the TREF analysis.

More specifically, in the polyethylene resin composition according to the present invention, the content of the first crystalline polymer may be 0.1% or more, or 0.5% or more, or 0.7% or more, or 1.1% or more, and 1.8% or less, or 1.5% or less, or 1.4% or less. Further, the content of the second crystalline polymer may be 20% or more, or 22% or more, or 25% or more, and 40% or less, or 35% or less, or 31% or less, or 30% or less.

When the content of the first crystalline polymer exceeds 1.8%, the content of TVOCs increases. On the contrary, when the content of the first crystalline polymer is 0%, or less than 0.1%, the content of TVOCs decreases, but the ultra-low molecular weight content is absent or extremely reduced, which may cause an increase in a processing load and a decrease in processability.

In addition, when the content of the second crystalline polymer is less than 20%, stretchability is reduced due to the lack of heavy crystals that act as inter-lamellar linkers. On the contrary, when the content of the second crystalline polymer exceeds 40%, the mechanical strength properties are deteriorated during the film production due to the relative decrease in the ultra-high molecular content that affects the mechanical strength.

Meanwhile, in the present invention, the TREF analysis of the polyethylene resin composition may be performed using PolymerChar's TREF device and trichlorobenzene as a solvent in the temperature range of -20°C to 130°C. For example, in the present invention, a cooling rate in the crystallization step during TREF analysis was set to 0.1°C/min. Detailed analysis methods and conditions are described in detail in Experimental Example below.

Through the TREF analysis described above, a TREF analysis graph having the elution temperature (Te) (°C) on the x-axis and the elution amount (dw/dt) on the y-axis is derived, and from the TREF analysis graph, the contents of the first and second crystalline polymers are calculated, respectively. Specifically, in the TREF analysis graph, the peaks in the elution temperature range of 25°C to 30°C are integrated to obtain the peak area, and then a ratio of the peak area in the corresponding temperature range with respect to the total peak area is calculated as a percentage, which is taken as the content of the first crystalline polymer (% or area%). Further, the peaks in the elution temperature range of 40°C to 90°C are integrated to obtain the peak area, and then a ratio of the peak area in the corresponding temperature range with respect to the total peak area is calculated as a percentage, which is taken as the content of the second crystalline polymer (% or area%).

In addition to the above-described crystal structure characteristics, the polyethylene resin composition according to the present invention has a high density of 0.940 $g/cm^3$ or more. Accordingly, it may exhibit excellent strength characteristics. On the other hand, when the density of the polyethylene resin composition is less than 0.940 $g/cm^3$, the mechanical strength characteristics decrease during film production, and the emission amount of TVOCs increases due to an increase in the content of the ultra-low molecular weight polymer.

More specifically, the density of the polyethylene resin composition may be 0.940 $g/cm^3$ or more, or 0.945 $g/cm^3$ or more, or 0.950 $g/cm^3$ or more, or 0.954 $g/cm^3$ or more, and 0.970 $g/cm^3$ or less, or 0.965 $g/cm^3$ or less, or 0.961 $g/cm^3$ or less, or 0.960 $g/cm^3$ or less. In this regard, the density is a value measured at a temperature of 23°C in accordance with the ASTM D1505 method.

Further, the polyethylene resin composition according to the present disclosure has a melt index ($MI_{2.16}$) of 0.1 g/10 min to 10 g/10 min, which is measured in accordance with ASTM D1238 (condition E, 190°C under a load of 2.16 kg). When the melt index of the polyethylene resin composition is less than 0.1 g/10 min, sheet stretchability and film processability deteriorate due to the excessively low melt index, and as a result, it is difficult to manufacture a stretched film. Further, when the melt index of the polyethylene resin composition exceeds 10 g/10 min, processability deteriorates due to the excessively high melt index, and thus it is difficult to manufacture a stretched film.

More specifically, the melt index ($MI_{2.16}$) may be 0.1 g/10 min or more, or 0.5 g/10 min or more, or 0.7 g/10 min or more, or 0.75 g/10 min or more, or 0.77 g/10 min or more, or 1 g/10 min or more, and 10 g/10 min or less, or 5 g/10 min or less, or 3 g/10 min or less, or 2.6 g/10 min or less, or 2 g/10 min or less, or 1.5 g/10 min or less.

Further, the polyethylene resin composition may have MFRR ($MI_5/MI_{2.16}$) of 2 to 5, which is a ratio obtained by dividing a melt index ($MI_5$) measured at a temperature of 190°C under a load of 5 kg by a melt index ($MI_{2.16}$) measured at a temperature of 190°C under a load of 2.16 kg in accordance with the ASTM D 1238 method.

More specifically, MFRR ($MI_5/MI_{2.16}$) may be 2 or more, or 2.5 or more, or 2.8 or more, or 3.5 or more, and 5 or less, or 4.8 or less, or 4.6 or less, or 4.52 or less, or 4.2 or less.

The polyethylene resin composition according to the present invention may exhibit excellent stretchability and physical properties by having the peak area distribution according to the melting temperature as described above, as well as a high density and an optimal range of melt index.

Further, the polyethylene resin composition according to the present invention specifically includes an ethylene homopolymer or an ethylene/C4 to C10 alpha-olefin copolymer.

Specific examples of the C4 to C10 alpha-olefin monomer may include 1-butene, 1-pentene, 4-methyl-1-pentene, 1-hexene, 1-heptene, 1-octene, 1-decene, 1-undecene, 1-dodecene, 1-tetradecene, 1-hexadecene, 1-eicocene, etc., and two or more thereof may be used.

More specifically, the polyethylene resin composition may include an ethylene homopolymer, an ethylene/1-butene copolymer, or an ethylene/1-hexene copolymer.

Meanwhile, the polyethylene resin composition according to the present invention as described above may be prepared by a slurry polymerization method using a plurality of reactors.

Specifically, the polyethylene resin composition may be prepared by a preparation method including:

a first step of preparing a first polyethylene by introducing hydrogen into a first reactor in the presence of a Ziegler-Natta catalyst and performing a first slurry polymerization reaction of ethylene, or ethylene and a C4 to C10 alpha-olefin first comonomer; and

a second step of transferring the first polyethylene to a second reactor which is connected to the first reactor, then introducing ethylene alone or ethylene and a C4 to C10 alpha olefin second comonomer, and performing a second slurry polymerization reaction,

wherein polymerization temperature (T1) and pressure (P1) during the first slurry polymerization reaction are higher than polymerization temperature (T2) and pressure (P2) during the second slurry polymerization reaction, and the polymerization temperature (T2) is 65°C or higher and lower than 80°C, and the pressure (P2) is 3 kgf/cm$^2$ to 4.5 kgf/cm$^2$ during the second slurry polymerization reaction.

Accordingly, in the second reactor, the first polyethylene transferred from the first reactor is further polymerized by ethylene, or ethylene and the C4 to C10 alpha olefin comonomer which are introduced into the second reactor, thereby preparing a polyethylene resin composition satisfying the above-described physical property requirements.

Specifically, since the method of preparing the polyethylene resin composition according to the present invention is performed by slurry polymerization using a plurality of reactors, two or more reactors, for example, two or more continuous stirred tank reactors (CSTR) may be used.

Specifically, in the above preparation method, the first reactor in which the first slurry polymerization reaction for preparing the first polyethylene occurs, and the second reactor which is connected to the first reactor and in which the second slurry polymerization reaction occurs may be used.

Further, the polymerization process in the first and second reactors is performed by a slurry polymerization process.

In a solution polymerization, a catalyst is activated through high-temperature and highpressure reaction, and therefore, the prepared resin composition exhibits deteriorated stretchability due to a narrow molecular weight distribution (MWD) and a low content of high molecular weight tails. In contrast, in the slurry polymerization process of the present invention, the polymerization is performed at a relatively low temperature, and therefore, it is possible to secure a molecular structure that has a wide MWD and contains a large amount of high molecular weight tails required for a polyethylene resin composition for producing a transparent film. As a result, the composition may exhibit excellent biaxial stretchability.

Further, with regard to the method of preparing the polyethylene resin composition according to the present invention, the polymerization temperature (T1) and pressure (P1) during the first slurry polymerization reaction are higher than the polymerization temperature (T2) and pressure (P2) during the second slurry polymerization reaction, and the second slurry polymerization reaction is performed at a polymerization temperature (T2) of 65°C or higher and lower than 80°C, and a pressure (P2) of 3 kgf/cm$^2$ to 4.5 kgf/cm$^2$.

As described, the temperature and pressure conditions during the first slurry polymerization reaction are higher than those during the second slurry polymerization reaction, and the temperature and pressure during the second slurry polymerization reaction are controlled to an optimal range, thereby achieving an NCD structure with a high content of SCBs derived from the comonomer in the low molecular weight region along with a bimodal molecular weight distribution. Due to the high SCB content in the low molecular weight region, fluidity of tie molecules between crystals increases, and as a result, fibril formation is suppressed during the stretching process, which may be more advantageous for stretching in the TD direction.

More specifically, the second slurry polymerization reaction is performed under conditions of a polymerization temperature (T2) of 65°C or higher, or 70°C or higher, and lower than 80°C, or 78°C or lower, or 75°C or lower, and a pressure (P2) of 3 kgf/cm$^2$ or more, or 3.1 kgf/cm$^2$ or more, and 4.5 kgf/cm$^2$ or less, or 4.3 kgf/cm$^2$ or less.

Meanwhile, during the first slurry polymerization reaction, the polymerization temperature (T1) may be 70°C to 90°C, and the pressure (P1) may be 5 kgf/cm$^2$ to 10 kgf/cm$^2$. More specifically, the polymerization temperature (T1) may be 70°C or higher, or 75°C or higher, or 78°C or higher, and 90°C or lower, or 85°C or lower, or 80°C or lower, and the pressure (P1) may be 5 kgf/cm$^2$ or more, or 6 kgf/cm$^2$ or more, or 6.5 kgf/cm$^2$ or more, or 6.7 kgf/cm$^2$ or more, and 10 kgf/cm$^2$ or less, or 8 kgf/cm$^2$ or less, or 7.7 kgf/cm$^2$ or less, or 7.4 kgf/cm$^2$ or less.

More specifically, the polymerization temperature and pressure ranges during the first slurry polymerization reaction and the polymerization temperature and pressure ranges during the second slurry polymerization reaction are satisfied, and at the same time, a difference (T1-T2) between the polymerization temperature (T1) during the first slurry polymerization reaction and the polymerization temperature (T2) during the second slurry polymerization reaction may be 3°C or higher, or 4°C or higher, or 5°C or higher, and 10°C or lower, or 8°C or lower, or 6°C or lower.

Further, a difference (P1-P2) between the pressure (P1) during the first slurry polymerization reaction and the pressure (P2) during the second slurry polymerization reaction may be 2 kgf/cm$^2$ or more, or 3 kgf/cm$^2$ or more, or 3.1 kgf/cm$^2$ or more, or 3.6 kgf/cm$^2$ or more, and 6 kgf/cm$^2$ or less, or 5 kgf/cm$^2$ or less, or 4 kgf/cm$^2$ or less, or 3.9 kgf/cm$^2$ or less.

When the conditions during the first and second slurry polymerization reactions satisfy the above requirements, the combined physical properties of the polyethylene resin composition described above may be easily achieved.

Further, with regard to the method of preparing the polyethylene resin composition according to the present invention, ethylene alone may be introduced, or a C4-C20 alpha olefin comonomer may be introduced together with ethylene during the first and second slurry polymerization reactions.

In the above preparation method, the input amount of ethylene introduced into the first slurry polymerization reaction may be larger than the input amount of ethylene introduced into the second slurry polymerization reaction. In this case, it may be easier to achieve the combined physical properties of polyethylene described above.

Further, the comonomer may be introduced into one or more polymerization reactions of the first slurry polymerization reaction and the second slurry polymerization reaction .

More specifically, the comonomer may be introduced during the first slurry polymerization reaction. As described, when the comonomer is introduced during the first slurry polymerization reaction, it is possible to achieve an NCD structure with a high content of SCBs derived from the comonomer in the low molecular weight region along with a bimodal molecular weight distribution. As a result, it may be more advantageous for stretching in the TD direction.

In addition, when the comonomer is further introduced, the total amount of ethylene and the total amount of comonomer introduced into the first and second reactors may satisfy a weight ratio of 1:0.001 to 1:0.1, and more specifically, a weight ratio of 1:0.01 to 1:0.1, or a weight ratio of 1:0.012 to 1:0.05, or 1:0.012 to 1:0.025, or 1:0.012 to 1:0.02. When the total amount of ethylene and the total amount of comonomer introduced into the first and second reactors satisfy the above weight ratio range, it is possible to more easily achieve the physical properties of the polyethylene resin composition described above.

Hereinafter, each step will be described in detail.

In the method of preparing the polyethylene resin composition according to the present invention, the first step is a step of preparing a first polyethylene by introducing hydrogen into a first reactor in the presence of a Ziegler-Natta catalyst and performing a first slurry polymerization reaction of ethylene and a C4 to C10 alpha-olefin comonomer (hereinafter, referred to as 'first comonomer').

The Ziegler-Natta catalyst used to prepare the first polyethylene may specifically be a magnesium-supported titanium catalyst. Further, the magnesium-supported titanium catalyst may further include halogenated hydrocarbon.

Specifically, the magnesium-supported titanium catalyst includes a solid magnesium carrier. Examples of the magnesium carrier may include magnesium, magnesium oxide, magnesium chloride, or silica-magnesia, etc., and any one thereof or a mixture of two or more thereof may be used. Among them, considering catalytic activity and ease of realizing optimal physical properties of the polyethylene resin composition, the magnesium carrier may be magnesium or magnesium chloride.

Meanwhile, the magnesium-supported titanium catalyst includes a titanium-containing compound represented by the following Chemical formula (1) as a main catalyst:

[Chemical formula 1] $\quad\quad$ $Ti(OR^1)_m X^1_{4-m}$

in Chemical formula 1,
$R^1$ is the same or different and an alkyl group having 1 to 10 carbon atoms,
$X^1$ is a halogen atom, more specifically, Cl, Br, or I, and
m is an integer of 0 to 4.

In Chemical formula 1, $R^1$ may be specifically an alkyl group having 1 or more, or 2 or more, or 3 or more carbon atoms, and 10 or less, or 8 or less, or 5 or less carbon atoms.

Further, $X^1$ may be specifically Br or Cl, and more specifically Cl.

Specific examples of the titanium-containing compound may include titanium tetrachloride ($TiCl_4$) or chlorinated titanium oxide, and any one thereof or a mixture of both may be used.

Further, the catalyst including the titanium-containing compound may include Mg:Ti at a molar ratio of 1:1 to 10:1, or 2:1 to 7:1, or 4:1 to 5:1, based on the content of Mg in the magnesium carrier and the content of Ti in the titanium-containing compound. When included within the above molar ratio range, superior catalytic activity may be achieved.

Further, the shape of the catalyst is not particularly limited, but it may be, for example, in the form of spherical fine particles.

Further, the average particle size of the catalyst may be 5 μm to 100 μm, more specifically, 5 μm or more, or 8 μm or more, or 10 μm or more, and 100 μm or less, or 50 μm or less, or 20 μm or less, or 15 μm or less, or 13 μm or less.

Meanwhile, the average particle size of the catalyst in the present invention may be measured by scanning electron microscopy (SEM) observation. Specifically, after obtaining an SEM image in which 100 or more catalyst particles are observed, a random straight line is plotted, and from the length of the corresponding straight line, the number of particles contained in the straight line, and the magnification, the average size of the catalyst particles may be calculated.

Further, the magnesium-supported titanium catalyst may further include halogenated hydrocarbon.

Halogenated hydrocarbon changes the electrical properties of titanium by coordinating around titanium, which acts as an active point, and the large volume of halogenated hydrocarbon creates sufficient three-dimensional space between titanium atoms, thereby greatly improving catalytic activity during polyethylene polymerization.

The halogenated hydrocarbon may be specifically an alkane having 1 to 12 carbon atoms, a cycloalkane having 3 to 12 carbon atoms, an alkene having 2 to 12 carbon atoms, an alkyne having 2 to 12 carbon atoms, or an aromatic hydrocarbon having 6 to 30 carbon atoms, which is substituted with one or more halogen groups. The halogen group may be fluoro, chloro, or bromo.

Specific examples may include bromoform, tetrachloroethane, hexachloroethane, pentachloroethane, 1,1,2,2-tetrachloroethane, 1-bromo-1-chloroethane, 1,2-dibromoethane, 1,2-dichloroethane, bromoethane, hexachloropropane, 1,2,3-trichloropropane, 1,2-dichloropropane, 1-chloropropane, 2-chloropropane, chlorobutane, dichlorobutane, 1-chloro-2-methylpropane, n-butyl chloride, tert-butyl chloride, 1-chloro-3-methylbutane, 1-chloropentane, 1,5-dichloropentane, bromopentane, neopentyl chloride, 1-chloroheptane, cyclopropyl bromide, cyclobutyl chloride, cyclohexyl chloride, cyclohexyl bromide, vinylidene chloride, 1,2,3,3-tetrachloropropene, 1,2-dibromo-1-propene, 1,3-dichloropropene, hexachloro-1,3-butadiene, 2-bromo-2-butene, propargyl chloride, chlorobenzene, tetrachlorobenzene, trichlorobenzene, dichlorobenzene, 4-chlorobenzyl chloride, benzyl chloride, or 1,1-dichloro-2-phenylcyclopropane, etc., and any one thereof or a mixture of two or more thereof may be used.

The halogenated hydrocarbon may be included in an amount of 0.1 mol or more, or 0.12 mol or more, or 0.13 mol or more, and 500 mol or less, or 100 mol or less, or 50 mol or less, or 10 mol or less, or 1 mol or less, or 0.5 mol or less, based on 1 mol of the titanium-containing compound as the main catalyst.

The Ziegler-Natta catalyst may be prepared by a preparation method including a carrier treatment step of mixing and reacting a raw material of the magnesium carrier with alcohol; and a titanium-containing compound supporting step of reacting the product resulting from the above step with the titanium-containing compound represented by Chemical formula 1, and further including the step of bringing into contact with and reacting with halogenated hydrocarbon during the carrier treatment step and the titanium-containing compound supporting step, or after the titanium-containing compound supporting step. Accordingly, the method of preparing the polyethylene resin composition according to the present invention includes, before the first step, the step of preparing the Ziegler-Natta catalyst, specifically, the carrier treatment step and the titanium-containing compound supporting step, and may further include, during the carrier treatment step and the titanium-containing compound supporting step, or after the titanium-containing compound supporting step, the step of bringing into contact with and reacting with halogenated hydrocarbon may be further included.

Specifically, the carrier treatment step for preparing the Ziegler-Natta catalyst may be performed by mixing and reacting the raw material of the magnesium carrier with alcohol under in a non-polar solvent.

Specific examples of the alcohol may include methanol, ethanol, 1-propanol, isopropanol, n-butanol, isobutanol, 1-pentanol, isopentanol, n-hexanol, 1-octanol, 2-ethyl-1-hexanol, etc., and any one thereof or a mixture of two or more thereof may be used. Among them, ethanol or 2-ethyl-1-hexanol may be used.

The alcohol may be used in an amount of 1 mol or more, or 1.5 mol or more, or 2 mol or more, and 10 mol or less, or 8 mol or less, or 6 mol or less, based on 1 mol of the raw material of the magnesium carrier.

Meanwhile, the raw material of the magnesium carrier may include the magnesium carrier itself, such as magnesium, magnesium oxide, magnesium chloride, or silica-magnesia, etc.; or magnesium alcoholate such as magnesium ethylate, etc., and any one thereof or a mixture of two or more thereof may be used. For example, when magnesium alcoholate is used as the raw material of the magnesium carrier, it is converted into magnesium chloride by titanium tetrachloride ($TiCl_4$) which is introduced as the main catalyst, and is included as a carrier in the final prepared catalyst.

The method of mixing the raw material of the magnesium carrier with alcohol may be specifically performed by adding the alcohol to a slurry which is prepared by mixing the raw material of the magnesium carrier with a non-polar solvent such as hexane, or adding, to the slurry, a solution in which the alcohol is dissolved in a non-polar solvent, and then stirring the solution at a temperature of 20°C to 150°C until it becomes a transparent solution. As a result of the above mixing, a homogeneous solution of the magnesium carrier is obtained, and in the solution, an adduct is formed in which crystals of the magnesium carrier are surrounded by alcohol molecules.

Next, the step of supporting the titanium-containing compound for preparing the Ziegler-Natta catalyst is performed by reacting the reaction product of the magnesium carrier and alcohol, which is generated in the carrier treatment step, with the titanium-containing compound.

Specifically, to the reaction product of the magnesium carrier and alcohol, which is generated in the carrier treatment step, the titanium-containing compound is directly added or a solution in which the titanium compound is dissolved in a non-polar solvent is added, and reacted at -50°C to 120°C or -20°C to 80°C.

The type and content of the titanium-containing compound are as described above.

Further, when the titanium-containing compound is introduced, the reaction product of the magnesium carrier and alcohol, which is generated in the carrier treatment step, may be stirred at 10 rpm to 500 rpm, or 50 rpm to 400 rpm.

Meanwhile, when the Ziegler-Natta catalyst is prepared, halogenated hydrocarbon is introduced when alcohol is added to the magnesium carrier in the carrier treatment step; halogenated hydrocarbon is introduced when the titanium-containing compound is introduced in the titanium-containing compound supporting step; or after completing the step of supporting the titanium-containing compound, the step of adding and reacting halogenated hydrocarbon may be further performed.

The type and content of the halogenated hydrocarbon are as described above.

The Ziegler-Natta catalyst prepared through the above preparation method may be used as it is during polyethylene polymerization, or may be used as a slurry in a non-polar solvent.

Further, the Ziegler-Natta catalyst may be used together with an organometallic compound represented by the following Chemical formula 2 as a cocatalyst.

[Chemical formula 2]     $R^2_n MX^2_{(3-n)}$

in Chemical formula 2,

M is selected from the group consisting of elements of groups IB, IIA, IIIB and IVB in the periodic table,

$R^2$ is the same or different and is an alkyl group having 1 to 10 carbon atoms,

$X^2$ is halogen, and

n is an integer of 1 to 3.

In Chemical formula 2, M is specifically aluminum, $R^2$ is an alkyl group having 1 to 5 carbon atoms or 2 to 4 carbon atoms, and $X^2$ is Cl or Br.

Specific examples of the organometallic compound represented by Chemical formula 2 may include triethyl aluminum, methyl aluminum dichloride, methyl aluminum dibromide, dimethyl aluminum chloride, dimethyl aluminum bromide, propyl aluminum dichloride, propyl aluminum dibromide, butyl aluminum dichloride, butyl aluminum dibromide, dibutyl aluminum chloride, dibutyl aluminum bromide, isobutyl aluminum dichloride, isobutyl aluminum dibromide, diisobutyl aluminum chloride, diisobutyl aluminum bromide, hexyl aluminum dichloride, hexyl aluminum dibromide, dihexyl aluminum chloride, dihexyl aluminum bromide, octyl aluminum dichloride, octyl aluminum dibromide, dioctyl aluminum chloride, and dioctyl aluminum bromide, etc., and any one thereof or a mixture of two or more thereof may be used.

Meanwhile, since the cocatalyst affects the polymerization activity of the magnesium-supported catalyst, the polymerization activity of the catalyst may be further increased by controlling the content of cocatalyst. For example, with regard to the organometallic compound represented by Chemical formula 2, aluminum may be used in an amount of 3 mol or more, or 10 mol or more, or 25 mol or more, and 200 mol or less, or 100 mol or less per 1 mol of titanium in the catalyst.

The cocatalyst may be added to the polyethylene polymerization reaction after mixing with the Ziegler-Natta catalyst, or may be separately added before or after the addition of the Ziegler-Natta catalyst. Accordingly, the method of preparing the polyethylene resin composition according to the present invention may further include the step of adding the cocatalyst when preparing the first polyethylene in the first step.

Meanwhile, the polymerization reaction in the first step is a copolymerization reaction of ethylene and alpha olefin, and the input amounts of ethylene and the first comonomer may be determined considering the physical properties of the first polyethylene and the final polyethylene resin composition to be achieved. For example, in the present invention, the content of the first comonomer introduced into the first reactor may be 0.01% by weight to 5% by weight, based on the total weight of ethylene introduced into the first reactor. When introduced in the above content range, the combined physical properties of the polyethylene resin composition described above may be easily realized, and as a result, an increase in the stretching ratio in the TD direction may be realized due to an increase in the low molecular and low crystalline content ratio.

In addition, the polymerization reaction in the first step is performed under the condition of introducing hydrogen gas.

Since the input amount of hydrogen gas affects the physical properties of the prepared copolymer, the input amount is appropriately determined depending on the physical properties to be achieved. For example, in the present invention, the total input amount of hydrogen gas may be 0.001% by weight to 0.5% by weight, based on the total weight of monomers including ethylene and alpha olefin comonomer which are introduced into the first and second reactors. When hydrogen gas is introduced in the above range, the combined physical properties of the polyethylene resin composition described above may be easily achieved. More specifically, hydrogen gas may be introduced in an amount of 0.001% by weight or more, or 0.01% by weight or more, or 0.05% by weight or more, or 0.07% by weight or more, and 0.5% by weight or less, or 0.3% by weight or less, or 0.1% by weight or less, or 0.09% by weight or less.

Further, during the polymerization reaction in the first step, the temperature and pressure conditions, and the type and input amount of the first comonomer are as previously defined.

The first polyethylene is prepared through polymerization reaction under the above preparation conditions.

Next, the second step is performed in the second reactor which is connected to the first reactor.

Specifically, the first polyethylene prepared in the first step is transferred to the second reactor which is connected to the first reactor, ethylene and the C4 to C10 alpha olefin second comonomer are introduced, and the second slurry polymerization reaction is performed.

In the second reactor, the additional polymerization reaction occurs between the first polyethylene transferred from the first reactor and the ethylene or the C4 to C10 alpha olefin second comonomer introduced into the second reactor.

The second slurry polymerization reaction may be carried out in the presence of a catalyst.

In this case, the applicable catalyst is a Ziegler-Natta catalyst, as described in the step 1. Accordingly, the Ziegler-Natta catalysts used in the first and second slurry polymerization reactions may be the same as or different from each other. When the same Ziegler-Natta catalyst is used in the first and second slurry polymerization reactions, it may be easier to control the physical properties of the polyethylene resin composition to be prepared, and accordingly, to achieve the above physical property requirements.

Further, the second slurry polymerization reaction may be carried out under conditions with hydrogen addition or without hydrogen addition. For example, when hydrogen gas is added, hydrogen gas may be added in an amount of 0.001% by weight to 0.05% by weight, based on the total weight of the monomers including the ethylene and the alpha olefin second comonomer introduced into the second reactor.

In addition, the temperature and pressure conditions, the type and content of the second comonomer during the polymerization reaction in the second step are as defined above.

Meanwhile, the preparation method according to the present invention may further include the step of melting and extruding the obtained polymerization product after completing the polymerization reaction in the second step.

A pellet-type polyethylene resin composition may be prepared by the above melting and extrusion process.

Since the polymerization product after the polymerization reaction in the second step is obtained in the powder form, the types of applicable antioxidants are limited. Further, since the content of the antioxidants has large variations according to powder, articles manufactured using the same have large variations in their physical properties. In contrast, when the melting and extrusion process is performed, the components including antioxidants are uniformly mixed, and the resulting articles may have uniform physical properties.

Meanwhile, as used herein, a pellet or a pellet-type is a small particle or piece formed by extrusion of raw material, and includes all the shape classified as a pellet in the art, including circle, flat, flake, polygon, rod shapes, etc. The size of pellet is appropriately determined according to the use and shape, and is not specifically limited, but the pellet in the present invention is defined as having an average diameter of 2 mm or more so as to be distinguished from powder having a small average diameter of about 1 mm. In this regard, the "diameter" is the longest distance among any straight distances of the outer circumference surface of the pellet, and it may be measured using imaging microscope, etc.

The melt extrusion process may be performed using a common extruder, and the specific method and conditions thereof are not particularly limited as long as the morphological conditions of the pellet are satisfied.

In addition, during the melt extrusion, one or more additives such as antioxidants, neutralizing agents, slip agents, anti-blocking agents, UV stabilizers, antistatic agents, etc. may be added. Accordingly, the prepared polyethylene resin composition may further include one or more additives such as antioxidants, neutralizing agents, slip agents, anti-blocking agents, UV stabilizers, and antistatic agents, etc. Meanwhile, in the present invention, the additives do not affect the physical properties of the polyethylene resin composition, and may improve the processability and quality of manufactured articles when manufacturing the articles using the resin composition.

For example, the antioxidants may include phenolic antioxidants; phosphorus-based antioxidants; amine-based antioxidants, etc., and any one thereof or a mixture of two or more thereof may be used. Specific examples of the antioxidant may include phenolic antioxidants such as pentaerythritol tetrakis[3-(3,5-di-tert-butyl-4-hydroxyphenyl)propionate], or 1,3,5-trimethyl-2,4,6-tris(3,5-di-tert-butyl-4-hydroxybenzyl)benzene, etc.; phosphorus-based antioxidants such as tris(2,4-di-tert-butylphenyl)phosphite, bis(2,4-di-tert-butylphenyl)pentaerythritol diphosphite, and bis(2,4-dicumylphenyl)pentaerythritol diphosphite, etc.; or amine-based antioxidants such as phenylnaphthylamine, 4,4'-($\alpha$,$\alpha$-dimethylbenzyl)diphenylamine, and N,N'-di-2-naphthyl-p-phenylenediamine, etc., and any one thereof or a mixture of two or more thereof may be used. In addition, commercially available Irganox™ 1010 (manufactured by BASF), Irganox™ 3114 (manufactured by BASF), Irganox™ 1076 (manufactured by BASF), Irgafos™ 168 (manufactured by BASF), Irgafos™ 626 (manufactured by BASF) or Cyanox™ 1790 (manufactured by CYTEC) may also be used. Among them, the polyethylene resin composition may include a mixture of a primary phenolic antioxidant and a secondary phosphorus-based antioxidant. In this regard, the primary phenolic antioxidant may be added in an amount of 50 ppm or more, or 200 ppm or more, or 250 ppm or more, and 500 ppm or less, or 300 ppm or less, based on the total weight of the polymerization product resulting from secondary polymerization. The secondary phosphorus-based antioxidant is added in an amount of 100 ppm or more, or 300 ppm or more, or 500 ppm or more, and 1000 ppm or less, or 700 ppm or less, based on the total weight of the polymerization product resulting from secondary polymerization. Therefore, the polyethylene resin composition may include the primary phenolic antioxidant in an amount of 50 ppm or more, or 200 ppm or more, or 250 ppm or more, and 500 ppm or less, or 300 ppm or less, and the secondary phosphorus-based antioxidant in an amount of 100 ppm or more, or 300 ppm or more, or 500 ppm or more, and 1000 ppm or less, or 700 ppm or less, based on the total weight of the resin composition.

Further, the neutralizing agent may include calcium stearate (Ca-St), calcium palmitate, zinc stearate, zinc palmitate, or hydrotalcite (magnesium aluminum hydroxy carbonate), etc., and any one thereof or a mixture of two or more thereof may be used. Further, commercially available DHT-4A (manufactured by KYOWA), etc. may be used. The neutralizing agent may be added in an amount of 100 ppm or more, or 300 ppm or more, or 500 ppm or more, and 1000 ppm or less, or 700 ppm or less, based on the total weight of the polymerization product resulting from secondary polymerization. Therefore, the polyethylene resin composition may include the neutralizing agent in an amount of 100 ppm or more, or 300 ppm or more, or 500 ppm or more, and 1000 ppm or less, or 700 ppm or less, based on the total weight of the resin composition.

Further, the melting and extrusion process may be performed according to common methods, for example, at an extrusion temperature of 180°C to 220°C, or 180°C to 210°C using an extruder such as a twin screw extruder.

The polyethylene resin composition satisfying the above-mentioned physical property requirements is prepared using the above-described preparation method. The prepared polyethylene resin composition exhibits excellent stretchability and TVOC properties, and there is no concern about defects such as breakage or shrinkage, etc. during stretching in the TD direction when manufacturing the biaxial stretched film. Further, the manufactured biaxial stretched film may exhibit excellent stretch ratio characteristics and tensile strength.

As used herein, the term "volatile organic compound (VOC)" may be defined as all organic compounds that exist in a gaseous state in the atmosphere. VOC is used to collectively refer to all organic substances that may exist in a gaseous state at room temperature and pressure, such as hydrocarbons consisting of only carbon and hydrogen, halogenated hydrocarbons, and hydrocarbons containing nitrogen or sulfur, etc. In a broad sense, semivolatile organic compounds may also be included. For example, in the present invention, volatile organic compounds may be organic solvents, thermal decomposition by-products of curing agents, or by-products generated from addition reactions, etc.

Specifically, the polyethylene resin composition has an emission amount of total volatile organic compounds (TVOCs) of 150 μg/g or less, or 110 μg/g or less, as calculated through Gas Chromatography/Mass Spectrometry-Thermal Desorption (GC/MS-TD) analysis after exposure at a temperature of 200°C for 10 minutes. As the TVOC emission is smaller, the polyethylene resin composition is better, and thus the lower limit is not particularly limited, but may be, for example, 10 μg/g or more, or 50 μg/g or more.

Meanwhile, in the present invention, the TVOC emission amount (μg/g) of the polyethylene resin composition may be determined by dissolving the polyethylene resin composition in a toluene standard solution to prepare a sample, exposing the sample to a high temperature of 300°C for 10 minutes, then analyzing using Gas Chromatography/Mass Spectrometry-Thermal Desorption (GC/MS-TD), and calculating the VOC values (μg/g) of individual substances generated in the measurement sample according to Equation 1 below, based on the chromatogram obtained as a result of the above analysis, and adding them up.

[Equation 1]

$$\text{VOC}_{\text{compound}} = [(\text{A}_{\text{compound}} / \text{A}_{\text{std}}) \times \text{C}_{\text{std}}] / \text{W}_{\text{sample}}$$

$\text{VOC}_{\text{compound}}$: Amount (μg/g) of volatile organic compounds (VOCs) of individual substances generated in a measurement sample after exposure to high temperature

$\text{A}_{\text{compound}}$: Peak area of individual substances generated in the measurement sample after exposure to high temperature

$\text{A}_{\text{std}}$: Peak area of toluene standard solution before exposure to high temperature

$\text{C}_{\text{std}}$: Weight (μg) of toluene, introduced using toluene standard solution

$\text{W}_{\text{sample}}$: Weight (g) of the measurement sample

The peak area of the individual substances generated in the measurement sample and the peak area of the toluene standard solution are obtained through integration for each peak.

Further, as the toluene standard solution, toluene is used alone or a solvent such as methanol is used, and its concentration may be about 0.1 μg/μL or more, or about 0.2 μg/μL or more, or about 0.5 μg/μL or more, or about 0.7 μg/μL or more, or about 0.8 μg/μL or more, or about 1.0 μg/μL or more, or about 1.2 μg/μL or more, and about 3.5 μg/μL or less,

or about 3.0 $\mu g/\mu L$ or less, or about 2.8 $\mu g/\mu L$ or less, or about 2.5 $\mu g/\mu L$ or less, or about 2.2 $\mu g/\mu L$ or less, or about 2.0 $\mu g/\mu L$ or less, or about 1.9 $\mu g/\mu L$ or less, or about 1.7 $\mu g/\mu L$ or less, or about 1.5 $\mu g/\mu L$ or less, or about 1.4 $\mu g/\mu L$ or less.

The analysis method by GC/MS-TD and the method of calculating the TVOC emission are explained in detail in Experimental Example below.

According to the present invention, provided is a stretched film manufactured using the above-described polyethylene resin composition.

The stretched film may be specifically a uniaxial stretched film or a biaxial stretched film.

The stretched film exhibits excellent stretchability and TVOC properties by including the polyethylene resin composition that satisfies the above-mentioned combined physical property requirements. Specifically, the stretched film has a maximum stretching ratio of 6 times to 8 times in the transverse direction (TD).

Hereinafter, preferred exemplary embodiments will be provided for better understanding of the present invention. However, the following exemplary embodiments are provided only for understanding the present invention more easily, but the content of the present invention is not limited thereby.

**<Preparation of Catalyst>**

**Preparation Example 1**

34 g of anhydrous magnesium chloride (99% by weight or more, a moisture content of less than 1%) was put in a 2 liter Buchi reactor dried with nitrogen, and 600 ml of purified hexane with a moisture content of less than 0.5 ppm was also put in the reactor. To the resulting reaction product, 175 ml of anhydrous 2-ethyl-1-hexanol was added under stirring, and then stirred at a temperature of 130°C for about 2 hours to prepare a homogeneous solution of magnesium carrier.

While stirring the homogeneous solution at a temperature of 35°C and a speed of 200 rpm, 200 ml of $TiCl_4$ was slowly added over 1 hour and stirred for another hour. In this process, a solid material was produced. After the solid material was precipitated, the liquid portion was removed, and the separated solid material was washed several times with hexane until the titanium concentration in the washing solution was 0.5 mmol or less. To the washed solid material, purified hexane was added to a total volume of 1 liter. The titanium concentration in the resulting hexane slurry was 30 mM. To the hexane slurry, 7 ml of cyclohexyl chloride was added at a temperature of 40°C, and stirred for 1 hour to obtain a Ziegler-Natta catalyst supported on magnesium chloride.

The prepared catalyst included $TiCl_4$ as a main catalyst, and also included cyclohexyl chloride at a molar ratio of 0.13, based on 1 mol of the main catalyst. In addition, a molar ratio of Mg:Ti in the catalyst was 4: 1, and the average size of catalyst particles was 8 $\mu m$.

**Preparation Example 2**

A Ziegler-Natta catalyst supported on magnesium chloride was prepared in the same manner as in Preparation Example 1, except that anhydrous magnesium chloride was changed to magnesium ethylate.

The prepared catalyst included $TiCl_4$ as a main catalyst, and also included cyclohexyl chloride at a molar ratio of 0.13, based on 1 mol of the main catalyst. In addition, a molar ratio of Mg/Ti in the catalyst was 5:1, and the average size of catalyst particles was 10 $\mu m$.

**Preparation Example 3**

A Ziegler-Natta catalyst supported on magnesium chloride was prepared in the same manner as in Preparation Example 1, except that anhydrous 2-ethyl-1-hexanol was changed to ethanol.

The prepared catalyst included $TiCl_4$ as a main catalyst, and also included cyclohexyl chloride at a molar ratio of 0.13, based on 1 mol of the main catalyst. In addition, a molar ratio of Mg/Ti in the catalyst was 4.5:1, and the average size of catalyst particles was 13 $\mu m$.

**<Preparation of Polyethylene Resin Composition>**

**Example 1**

In a bimodal slurry process using two 100 L continuous stirred tank reactors (CSTR), a high density polyethylene resin composition was prepared by a method of preparing polyethylene by polymerization reaction in the presence of a Ziegler-Natta catalyst system.

In detail, in a first reactor, a first polyethylene was prepared by performing a primary polymerization reaction in the presence of ethylene, the Ziegler-Natta catalyst prepared in Preparation Example 1, an aqueous TEAL solution (30 mmol/hr) as a cocatalyst, hydrogen, and a comonomer under conditions shown in Table 1 below.

In a second reactor, a second polyethylene was prepared by performing a second polymerization reaction under conditions shown in Table 1 below. In this regard, the first polyethylene polymerized in the first reactor was fed to the second reactor connected in series to undergo secondary polymerization.

Based on the total weight of the polymerization product obtained as a result of the secondary polymerization, 250 ppm of BASF's Irganox 1010 as a primary antioxidant, 500 ppm of BASF's Irgafos 168 as a secondary antioxidant, and 500 ppm of calcium stearate (Ca-St) as a neutralizing were fed and mixed, and then extruded at an extrusion temperature of 190°C using a twin screw extruder (TEK 30 MHS, manufactured by SMPLATECH CO., diameter of 32 pi, LID = 40) to prepare a pellet-type polyethylene resin composition.

**Examples 2 to 4 and Comparative Examples 1 to 9**

Each polyethylene resin composition was prepared in the same manner as in Example 1, except that conditions were changed as in Tables 1 and 2 below.

[Table 1]

| | | Example | | | |
|---|---|---|---|---|---|
| | | 1 | 2 | 3 | 4 |
| First reactor | Input amount of ethylene [kg/hr] | 5.5 | 5.5 | 5.5 | 5.5 |
| | Type of catalyst | Preparation Example 2 | Preparation Example 1 | Preparation Example 3 | Preparation Example 1 |
| | Input amount of catalyst [ml/hr] | 50 | 50 | 50 | 50 |
| | Type of first comonomer | - | 1-butene | - | 1-hexene |
| | Input amount of first comonomer [ml/min] | 0 | 5.5 | 0 | 3 |
| | Hydrogen [g/hr] | 7 | 8 | 7 | 8 |
| | Temperature (T1) [°C] | 80 | 80 | 80 | 80 |
| | Pressure (P1) [kgf/cm$^2$] | 6.7 | 6.7 | 7.1 | 7.4 |
| Second reactor | Ethylene [kg/hr] | 4.5 | 4.5 | 4.5 | 4.5 |
| | Input amount of catalyst [ml/hr] | 0 | 0 | 0 | 0 |
| | Type of second comonomer | - | - | - | - |
| | Input amount of second comonomer [ml/min] | 0 | 0 | 0 | 0 |
| | Hydrogen [g/hr] | 0 | 0 | 2 | 0 |
| | Temperature (T2) [°C] | 75 | 75 | 75 | 75 |
| | Pressure (P2) [kgf/cm$^2$] | 3.1 | 3.1 | 3.2 | 4.3 |
| Weight ratio of ethylene:comonomer | | 1:0 | 1:0.020 | 1:0 | 1:0.012 |
| Input amount of hydrogen [wt%] | | 0.07 | 0.08 | 0.09 | 0.08 |

12

[Table 2]

| | | Comparative Example | | | | | | | | |
|---|---|---|---|---|---|---|---|---|---|---|
| | Comparative Example | 1 | 2 | 3 | 4 | 5 | 6 | 7 | 8 | 9 |
| First reactor | Ethylene [kg/hr] | 5.5 | 5.5 | 5.5 | 10 | 5.5 | 5.5 | 5.5 | 10 | 10 |
| | Type of catalyst | Preparation Example 1 | Preparation Example 2 | Preparation Example 3 | Preparation Example 1 | Preparation Example 1 | Preparation Example 1 | Preparation Example 2 | Preparation Example 1 | Preparation Example 1 |
| | Input amount of catalyst [ml/hr] | 50 | 50 | 50 | 70 | 50 | 50 | 50 | 80 | 80 |
| | Type of first comonomer | - | 1-butene | 1-hexene | 1-butene | - | 1-butene | 1-hexene | - | 1-butene |
| | Input amount of first comonomer [ml/min] | 0 | 0.5 | 3 | 2 | 0 | 5.5 | 2.8 | 0 | 6 |
| | Hydrogen [g/hr] | 8.5 | 8 | 7 | 9 | 7 | 7 | 7 | 2 | 14 |
| | Temperature (T1) [°C] | 80 | 80 | 80 | 80 | 84 | 76 | 80 | 80 | 84 |
| | Pressure (P1) [kgf/cm$^2$] | 7.7 | 7.4 | 6.5 | 5.7 | 8.5 | 7.2 | 6.5 | 9.2 | 8.1 |
| Second reac | Ethylene [kg/hr] | 4.5 | 4.5 | 4.5 | - | 4.5 | 4.5 | 4.5 | - | 4.5 |

(continued)

| | | Comparative Example | | | | | | | | |
|---|---|---|---|---|---|---|---|---|---|---|
| | Comparative Example | 1 | 2 | 3 | 4 | 5 | 6 | 7 | 8 | 9 |
| tor | Input amount of catalyst [ml/hr] | 0 | 0 | 0 | 0 | 0 | 0 | 0 | 0 | 0 |
| | Type of second comonomer | - | - | - | - | - | 1-octene | - | - | 1-butene |
| | Input amount of second comonomer [ml/min] | 0 | 0 | 0 | 0 | 0 | 8 | 0 | 0 | 3 |
| | Hydrogen [g/hr] | 0 | 0 | 0 | 0 | 0 | 0 | 0 | 0 | 7 |
| | Temperature (T2) [°C] | 75 | 74 | 75 | - | 80 | 72 | 75 | - | 80 |
| | Pressure (P2) [kgf/cm$^2$] | 4.6 | 4.8 | 2.8 | - | 4.5 | 5.2 | 2.8 | - | 6.9 |
| Weight ratio of ethylene:comonomer | | 1:0 | 1:0.002 | 1:0.012 | 1:0.007 | 1:0 | 1:0.055 | 1:0.011 | 1:0 | 1:0.033 |
| Input amount of hydrogen [wt%] | | 0.085 | 0.08 | 0.07 | 0.09 | 0.07 | 0.07 | 0.07 | 0.02 | 0.21 |

In Tables 1 and 2, the weight ratio of ethylene:comonomer is a weight ratio of the total amount of ethylene introduced into the first and second reactors and the total amount of comonomers including the first and second comonomers.

The input amount of hydrogen (wt%) is expressed as a percentage of the total weight of hydrogen input, based on the total weight of ethylene introduced into the first and second reactors.

**Experimental Example 1**

The physical properties of the polyethylene resin compositions prepared in Examples and Comparative Examples were measured as follows, and the results are shown in Table 3 below.

(1) Density: measured in accordance with the ASTM D1505 method.

(2) Melt Index ($MI_{2.16}$): measured in accordance with the ASTM D1238 (condition E, 190 °C, under a load of 2.16 kg) method.

(3) MFRR ($MI_{21.6}/MI_{2.16}$): obtained by dividing $MI_{21.6}$ by $MI_{2.16}$ after measuring $MI_5$ at 190°C under a load of 5 kg and $MI_{2.16}$ at 190°C under a load of 2.16 kg in accordance with the ASTM D1238 method, respectively.

(4) TREF analysis

Temperature rising elution fractionation (TREF) analysis was performed using PolymerChar's TREF device and trichlorobenzene as a solvent in the range of -20°C to 130°C. At this time, a cooling rate of the crystallization step was 0.1°C/min, and the analysis was performed under the following conditions.

In detail, 30 mg of a polyethylene resin composition sample was dissolved in 20 mL of trichlorobenzene solvent at 150°C for 60 minutes and then stabilized at 140°C for 20 minutes. The solution was introduced into a TREF column, and then cooled to -20°C at a cooling rate of 0.1°C/min, and maintained for 2 minutes. Thereafter, while heating from -20°C to 130°C at a rate of 1°C/min, the solvent trichlorobenzene was applied to the column at a flow rate of 0.5 mL/min to measure the concentrations of the eluted polymers. From the results of measuring the concentrations, a TREF analysis graph was derived using the elution temperature (Te) (°C) on the x-axis and the elution amount (dw/dt) on the y-axis.

\<TREF measurement conditions\>

Dissolution Rate: 40 °C/min
Stabilization Rate: 40 °C/min
Crystallization Rate 1: 0.1 °C/min
Elution Rate: 1 °C/min
Cleaning rate: 30 °C/min
Dissolution temperature: 150 °C
Stabilization temperature: 140 °C
Crystallization temperature: 35 °C
Elution init temp.: 35 °C
Elution temperature: 140 °C
Post elution temperature: 150 °C
Cleaning temperature: 150 °C
Dissolution time: 60 min
Stabilization time: 20 min
Crystallization time: 10 min
Pre-injection time: 10 min
Soluble Fraction time: 10 min
post elution time: 10 min
Cleaning time: 10 min
Cleaning cycles: 1

In addition, from the TREF analysis graph, the content of a fraction eluted in the elution temperature range of 25°C to 30°C, i.e., a first crystalline polymer fraction, and the content of a fraction eluted in the elution temperature range of 40°C to 90°C, i.e., a second crystalline polymer fraction, were calculated respectively.

In detail, in the TREF analysis graph, the peaks in the elution temperature range of 25°C to 30°C were integrated to obtain the peak area, and then a ratio of the peak area in the corresponding temperature range with respect to the total peak area was calculated as a percentage, which was taken as the content of the first crystalline polymer (% or area%). Further, the peaks in the elution temperature range of 40°C to 90°C were integrated to obtain the peak area, and then a ratio of the peak area in the corresponding temperature range with respect to the total peak area was calculated as a percentage, which was taken as the content of the second crystalline polymer (% or area%).

[Table 3]

| | Density | $MI_{2.16}$ | MFRR | Content of first crystalline polymer (%) | Content of second crystalline polymer (%) |
|---|---|---|---|---|---|
| | $(g/cm^3)$ | (g/10min) | $(MI_5/MI_{2.16})$ | | |
| Example 1 | 0.960 | 0.77 | 3.89 | 0.7 | 22 |
| Example 2 | 0.950 | 1.24 | 4.52 | 1.5 | 31 |
| Example 3 | 0.961 | 2.51 | 2.83 | 1.4 | 25 |
| Example 4 | 0.954 | 1.19 | 4.11 | 1.1 | 28 |

(continued)

| | Density | $MI_{2.16}$ | MFRR | Content of | Content of |
|---|---|---|---|---|---|
| | (g/cm³) | (g/10min) | ($MI_5/MI_{2.16}$) | first crystalline polymer (%) | second crystalline polymer (%) |
| Comparative Example 1 | 0.962 | 0.87 | 3.60 | 1.1 | 3 |
| Comparative Example 2 | 0.960 | 0.72 | 3.86 | 1.8 | 7 |
| Comparative Example 3 | 0.953 | 0.90 | 3.89 | 3.3 | 27 |
| Comparative Example 4 | 0.956 | 1.72 | 3.87 | 2.5 | 24 |
| Comparative Example 5 | 0.969 | 1.12 | 3.35 | 2.0 | 11 |
| Comparative Example 6 | 0.927 | 1.69 | 3.02 | 7.8 | 36 |
| Comparative Example 7 | 0.952 | 0.9 | 3.89 | 2.2 | 15.8 |
| Comparative Example 8 | 0.964 | 0.02 | 3.42 | 0.1 | 5.2 |
| Comparative Example 9 | 0.953 | 21.3 | 3.05 | 2.7 | 29.4 |

**Experimental Example 2**

The polyethylene resins composition prepared in Examples and Comparative Examples were evaluated for sheet stretchability, film stretchability, and TVOC emission amount according to the following methods, respectively.

(1) Sheet stretchability [%]

A sheet (sheet thickness: 2 mm) of the polyethylene resin composition was manufactured at a temperature of 190°C using Auto Press (Collin, Lab line P300s), and then cut in accordance with the ASTM D882 standard to prepare a sheet sample for measurement.

The sheet prepared above was fixed horizontally on a Zwick tensile tester (UTM), and then a tensile test was performed by pulling the upper part of the sheet at room temperature (23 ± 5°C). The strain (%) until breakage occurred when the sheet was pulled at a stretch speed of 50 mm/min was measured and expressed as sheet stretchability.

(2) Film stretchability

For each of the polyethylene resin compositions of Examples and Comparative Examples, a 0.72 mm-thick cast sheet was manufactured using Bruckner's Lab extruder line (LID ratio: 42, Screw diameter: 25 mm, Melt/T-Die temperature: 250°C).

When the cast sheet thus manufactured was biaxially stretched as a film with a final thickness of about 20 μm using Bruckner's Lab Stretcher KARO 5.0 for film biaxial stretching, the maximum stretching ratio (magnification) in the TD direction which was stretchable without breaking or defecting the film was measured. Before biaxial stretching, the cast sheet was preheated at 120°C for 60 seconds, and sequential stretching was performed in the MD → TD direction.

However, the polyethylene resin compositions of Comparative Example 8 and Comparative Example 9 had poor processability due to excessively low or high melt index, making it impossible to manufacture a stretched film.

<Measurement conditions>

Sample size (width x height): 90 mm x 90 mm
Stretch profile: sequential
Stretch rate: fixed 4 times in MD direction, 2-9 times in TD direction
Stretch speed: 300%/s
Stretch temperature: 120°C
Preheat temperature: 120°C
Preheat time: 60 s

(3) TVOC emission amount [μg/g]

The TVOC (total volatile organic compounds) emission amount was analyzed by Gas Chromatography/Mass Spectrometry-Thermal Desorption (GC/MS-TD) after exposing the polyethylene resin composition samples of Examples and Comparative Examples to high temperature, and the TVOC emission amount was calculated by adding up the values of individual VOCs generated from the measurement samples.

In detail, samples prepared by dissolving the polyethylene resin compositions of Examples and Comparative Examples in a toluene standard solution (toluene only) at a concentration of 20 mg/10 ml were placed in a GC oven, respectively and exposed to high temperature under the following conditions, followed by GC/MS-TD analysis.

[GC/MS-TD analysis conditions]

- Amount of sample: 20 mg
- GC oven (high temperature exposure conditions): after maintaining at 50°C for 5 minutes, the temperature was increased to 300°C at a rate of 10°C/min and maintained at 300°C for 10 minutes.
- Temperature and time for GC/MS-TD analysis: 200°C and 10 min
- Column: HP-5MS (manufactured by Agilent Technologies)
- Toluene standard solution

Based on the chromatogram obtained as a result of the above analysis, the VOC values (μg/g) of individual substances generated in the measurement sample were calculated according to Equation 1 below, and then added up to calculate the TVOC emission amount (μg/g).

[Equation 1]

$$VOC_{compound} = [(A_{compound} / A_{std}) \times C_{std}] / W_{sample}$$

$VOC_{compound}$: Amount (μg/g) of volatile organic compound (VOC) of individual substance generated from measurement sample

$A_{compound}$: Peak area of individual substance generated from measurement sample

$A_{std}$: Peak area of toluene standard solution

$C_{std}$: Weight (μg) of toluene used

$W_{sample}$: Weight (g) of measurement sample (The weight of the sample in this Experimental Example was 20 mg, i.e., 0.02 g)

Meanwhile, the peak areas of individual substances generated in the measurement sample and the peak area of the toluene standard solution were obtained through integration for each peak.

[Table 4]

| | Sheet stretchability (%) | Film stretchability (maximum stretching ratio in TD direction, magnification) | TVOC emission amount [μg/g] |
|---|---|---|---|
| Example 1 | 1133.3 | 6 | 50 |
| Example 2 | 1625.2 | 8 | 110 |
| Example 3 | 1369.5 | 7 | 90 |
| Example 4 | 1417.3 | 7 | 60 |
| Comparative Example 1 | 616.5 | 4 | 100 |
| Comparative Example 2 | 382.8 | 3 | 180 |
| Comparative Example 3 | 901.5 | 6 | 250 |
| Comparative Example 4 | 812.4 | 5 | 190 |

(continued)

|  | Sheet stretchability (%) | Film stretchability (maximum stretching ratio in TD direction, magnification) | TVOC emission amount [µg/g] |
|---|---|---|---|
| Comparative Example 5 | 56.5 | 2 | 170 |
| Comparative Example 6 | 1080.3 | 6 | 250 |
| Comparative Example 7 | 701.5 | 4 | 190 |
| Comparative Example 8 | 96.7 | ND | 120 |
| Comparative Example 9 | 1693.0 | ND | 230 |
| In Table 4, 'ND' means not measured. | | | |

As a result of the experiment, the resin compositions of Examples 1 to 3 according to the present invention showed excellent stretchability and greatly reduced TVOC emission when manufacturing the stretched films, as compared to the resin compositions of Comparative Examples.

**Claims**

1. A polyethylene resin composition comprising an ethylene homopolymer or an ethylene/C4 to C10 alpha olefin copolymer, and satisfying the following requirements of (a1) to (a3):

   (a1) a content of a first crystalline polymer is 0.1% to 1.8%, which is defined as a ratio of a peak area of a fraction eluted in an elution temperature range of 25°C to 30°C relative to a total peak area, and a content of a second crystalline polymer is 20% to 40%, which is defined as a ratio of a peak area of a fraction eluted in an elution temperature range of 40°C to 90°C relative to the total peak area, in a TREF analysis graph with an elution temperature (Te) on x-axis and an elution amount (dw/dt) on y-axis during a temperature rising elution fractionation (TREF) analysis,
   (a2) a density measured at a temperature of 23°C in accordance with ASTM D1505 method: 0.940 $g/cm^3$ or more, and
   (a3) a melt index ($MI_{2.16}$) measured in accordance with ASTM D1238 (condition E, 190°C, under a load of 2.16 kg) method: 0.1 g/10 min or more and 10 g/10 min or less.

2. The polyethylene resin composition of claim 1, wherein the polyethylene resin composition has the content of the first crystalline polymer of 0.5% to 1.5%, and the content of the second crystalline polymer of 20% to 35%.

3. The polyethylene resin composition of claim 1, wherein the polyethylene resin composition has a density of 0.950 $g/cm^3$ to 0.970 $g/cm^3$.

4. The polyethylene resin composition of claim 1, wherein the polyethylene resin composition has a melt index ($MI_{2.16}$) of 0.5 g/10min to 3 g/10min, as measured in accordance with the ASTM D1238 (condition E, 190°C, under a load of 2.16 kg) method.

5. The polyethylene resin composition of claim 1, wherein the polyethylene resin composition has a MFRR ($MI_{21.6}/MI_{2.16}$) of 2 to 5, which is a ratio obtained by dividing a melt index ($MI_{21.6}$) measured at a temperature of 190 °C under a load of 21.6 kg by the melt index ($MI_{2.16}$) measured at a temperature of 190°C under a load of 2.16 kg in accordance with the ASTM D 1238 method.

6. The polyethylene resin composition of claim 1, comprising an ethylene homopolymer, an ethylene/1-butene copolymer, or an ethylene/1-hexene copolymer.

7. The polyethylene resin composition of claim 1, wherein an emission amount of total volatile organic compounds of the polyethylene resin composition is 150 µg/g or less, which is determined by dissolving the polyethylene resin composition in a toluene standard solution to prepare a sample, exposing the sample at a temperature of 300°C for 10 minutes, then analyzing using gas chromatography/mass spectrometry-thermal desorption, and from the above analysis, calculating an amount ($\mu$g/g) of volatile organic compounds of an individual substances generated in the measurement sample according to Equation 1 below, and adding them up.

[Equation 1]

$$\mathrm{VOC_{compound}} = [(\mathrm{A_{compound}} / \mathrm{A_{std}}) \times \mathrm{C_{std}}] / \mathrm{W_{sample}}$$

$\mathrm{VOC_{compound}}$: Amount ($\mu$g/g) of volatile organic compound (VOC) of individual substance generated from the measurement sample
$\mathrm{A_{compound}}$: a peak area of the individual substance generated from the measurement sample
$\mathrm{A_{std}}$: a peak area of the toluene standard solution
$\mathrm{C_{std}}$: a weight ($\mu$g) of the toluene used
$\mathrm{W_{sample}}$: a weight (g) of the measurement sample

8. A stretched film comprising the polyethylene resin composition of claim 1.

9. The stretched film of claim 8, wherein the stretched film has a maximum stretching ratio of 6 times to 8 times in transverse direction (TD).

10. The stretched film of claim 8, wherein the stretched film is a uniaxial stretched film or a biaxial stretched film.

## INTERNATIONAL SEARCH REPORT

| International application No. |
| --- |
| **PCT/KR2023/021363** |

**A. CLASSIFICATION OF SUBJECT MATTER**

**C08L 23/04**(2006.01)i; **C08L 23/06**(2006.01)i; **C08L 23/08**(2006.01)i; **C08J 5/18**(2006.01)i

According to International Patent Classification (IPC) or to both national classification and IPC

**B. FIELDS SEARCHED**

Minimum documentation searched (classification system followed by classification symbols)

C08L 23/04(2006.01); B32B 27/32(2006.01); B65D 65/02(2006.01); B65D 65/40(2006.01); C08F 10/02(2006.01); C08F 210/16(2006.01); C08F 4/642(2006.01); C08J 5/18(2006.01); G09F 3/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에틸렌(polyethylene), 연신성(stretchability), 연신 필름(stretched film), 온도 상승 용리 분별(temperature rising elution fractionation), 밀도(density), 용융 지수(melt index), 결정성 중합체(crystalline polymer)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-196678 A (DAINIPPON PRINTING CO., LTD.) 12 July 2002 (2002-07-12)<br>See paragraphs [0005], [0007], [0009] and [0011]. | 1-10 |
| Y | KR 10-2011-0131259 A (BOREALIS AG) 06 December 2011 (2011-12-06)<br>See paragraphs [0008], [0029]-[0035], [0095], [0101]-[0107] and [0160]; and table 5. | 1-10 |
| A | JP 2015-503644 A (SAUDI BASIC INDUSTRIES CORPORATION) 02 February 2015 (2015-02-02)<br>See entire document. | 1-10 |
| A | JP 2019-532833 A (DOW GLOBAL TECHNOLOGIES LLC) 14 November 2019 (2019-11-14)<br>See entire document. | 1-10 |
| A | JP 2014-518928 A (DOW GLOBAL TECHNOLOGIES LLC) 07 August 2014 (2014-08-07)<br>See entire document. | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **01 April 2024** | **01 April 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT
Information on patent family members

International application No.

PCT/KR2023/021363

| Patent document cited in search report | | | Publication date (day/month/year) | Patent family member(s) | | | Publication date (day/month/year) |
|---|---|---|---|---|---|---|---|
| JP | 2002-196678 | A | 12 July 2002 | JP | 4748346 | B2 | 17 August 2011 |
| KR | 10-2011-0131259 | A | 06 December 2011 | BR | PI1009363 | A2 | 08 March 2016 |
| | | | | BR | PI1009363 | B1 | 03 March 2020 |
| | | | | CN | 102428107 | A | 25 April 2012 |
| | | | | CN | 102428107 | B | 09 October 2013 |
| | | | | EP | 2246369 | A1 | 03 November 2010 |
| | | | | EP | 2246369 | B1 | 05 September 2012 |
| | | | | KR | 10-1277113 | B1 | 25 June 2013 |
| | | | | US | 2012-0053308 | A1 | 01 March 2012 |
| | | | | US | 8546499 | B2 | 01 October 2013 |
| | | | | WO | 2010-125022 | A1 | 04 November 2010 |
| JP | 2015-503644 | A | 02 February 2015 | CN | 104080821 | A | 01 October 2014 |
| | | | | CN | 104080821 | B | 17 May 2017 |
| | | | | CN | 104093749 | A | 08 October 2014 |
| | | | | CN | 104093749 | B | 07 August 2018 |
| | | | | EP | 2610269 | A1 | 03 July 2013 |
| | | | | EP | 2797966 | A1 | 05 November 2014 |
| | | | | EP | 2797966 | B1 | 22 January 2020 |
| | | | | EP | 2797967 | A1 | 05 November 2014 |
| | | | | EP | 2797967 | B1 | 23 January 2019 |
| | | | | IN | 5639DEN2014 | A | 03 April 2015 |
| | | | | JP | 2015-503643 | A | 02 February 2015 |
| | | | | JP | 6149302 | B2 | 21 June 2017 |
| | | | | JP | 6166277 | B2 | 19 July 2017 |
| | | | | US | 2015-0011702 | A1 | 08 January 2015 |
| | | | | US | 2015-0031824 | A1 | 29 January 2015 |
| | | | | US | 9321864 | B2 | 26 April 2016 |
| | | | | US | 9902845 | B2 | 27 February 2018 |
| | | | | WO | 2013-097936 | A1 | 04 July 2013 |
| | | | | WO | 2013-097937 | A1 | 04 July 2013 |
| JP | 2019-532833 | A | 14 November 2019 | AR | 109358 | A1 | 21 November 2018 |
| | | | | BR | 112019002507 | A2 | 14 May 2019 |
| | | | | BR | 112019002507 | B1 | 16 November 2022 |
| | | | | CA | 3034808 | A1 | 01 March 2018 |
| | | | | CN | 109562595 | A | 02 April 2019 |
| | | | | CN | 109562595 | B | 18 June 2021 |
| | | | | EP | 3504060 | A1 | 03 July 2019 |
| | | | | EP | 3504060 | B1 | 13 January 2021 |
| | | | | ES | 2858200 | T3 | 29 September 2021 |
| | | | | JP | 7071335 | B2 | 18 May 2022 |
| | | | | MX | 2019001723 | A | 01 July 2019 |
| | | | | MY | 192180 | A | 04 August 2022 |
| | | | | US | 11407206 | B2 | 09 August 2022 |
| | | | | US | 2019-0322086 | A1 | 24 October 2019 |
| | | | | WO | 2018-038905 | A1 | 01 March 2018 |
| JP | 2014-518928 | A | 07 August 2014 | BR | 112013030295 | A2 | 06 December 2016 |
| | | | | BR | 112013030295 | B1 | 05 January 2021 |
| | | | | CN | 105874001 | A | 17 August 2016 |
| | | | | CN | 105874001 | B | 12 June 2018 |
| | | | | EP | 2714797 | A1 | 09 April 2014 |

Form PCT/ISA/210 (patent family annex) (July 2022)

**INTERNATIONAL SEARCH REPORT**
Information on patent family members

International application No.

**PCT/KR2023/021363**

| Patent document cited in search report | Publication date (day/month/year) | Patent family member(s) | | Publication date (day/month/year) |
|---|---|---|---|---|
| | | EP 2714797 | B1 | 02 August 2017 |
| | | ES 2640564 | T3 | 03 November 2017 |
| | | JP 5932980 | B2 | 08 June 2016 |
| | | MX 2013013948 | A | 23 January 2014 |
| | | MX 343537 | B | 09 November 2016 |
| | | PL 2714797 | T3 | 29 December 2017 |
| | | RU 2013158337 | A | 10 July 2015 |
| | | US 2014-0221558 | A1 | 07 August 2014 |
| | | US 2015-0175828 | A1 | 25 June 2015 |
| | | US 9000096 | B2 | 07 April 2015 |
| | | US 9267051 | B2 | 23 February 2016 |
| | | WO 2012-166093 | A1 | 06 December 2012 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220189077

- KR 1020230187174